# EUROPEAN PATENT SPECIFICATION

(11) **EP 1 197 878 B1**
(45) Date of publication and mention of the grant of the patent: **11.05.2005**
(21) Application number: 01113557.1
(22) Date of filing: 13.06.2001
(51) Int. Cl.: G06F 17/30, H04L 29/06

(54) **Method for controlling acess to a data communication network**
Verfahren und System für die Zugriffsteuerung in einem Datenkommunikationsnetzwerk
Procédé et système de filtrage du contenu d'informations récupéré dans un réseau de communication de données

(30) Priority: 10.10.2000 IT MI002189
(43) Date of publication of application: 17.04.2002
(73) Proprietor: Gestweb S.p.A., 25124 Brescia (IT)
(72) Inventor: Vinati, Felice, 25069 Villa Carcina, (Prov. of Brescia) (IT); Vinati, Samuele, 25123 Brescia (IT)
(74) Representative: Parisi, Luigi

(56) References cited:
- US-A- 5 884 033
- US-A- 5 987 606
- US-A- 6 065 055

## Description

The present invention relates to a method for controlling access to a data communication network. More particularly, the invention relates to a method for controlling access to the Internet.

It is known that the increasing growth of data communication networks, such as the Internet, has led a very large number of users to go online every day.

On the other hand, the increasing growth of the data communication network has caused information of various kinds to be placed on the network, with a consequent proliferation of sites containing data and information, as well as images, videos and the like, whose viewing should be reserved exclusively to adult users.

However, it is evident that the simplicity of access to a data communication network, such as for example the Internet, allows anyone, and especially minors, who usually have a considerable time available, to access the network without any restriction, being able to navigate it and visit practically any kind of site without their minor age being protected.

Furthermore, the parents of minors cannot know which sites their children visit and therefore are practically unable to perform any kind of control.

Document US 5,987,606 discloses a method and a system for filtering Internet content retrieved from an Internet computer network by a remote Internet Service Provider server and forwarded to a local client computer. The method and system of US 5,987,606 matches at least one filtering scheme, such as an inclusive or exclusive filter, and at least one set of filtering elements, such as a list of allowed or excluded sites, to each Internet access request generated at the local client computer. The filtering scheme is implemented on the ISP server. This prior art method and system provides individual end-user customizable access control filtering and data storage on the ISP server. However, US 5,987,606 does not classify users according to their adult or minor age with the specific aim of subsequently direct the navigation according to the user profile.

The aim of the present invention is to provide a method for controlling access to a data communication network which allows to distinguish between network access requested by a minor and access requested by an adult user and then direct navigation according to the user's profile.

Within this aim, an object of the present invention is to provide a method for controlling access to a data communication network which, in the case of a minor user, allows to perform a controlled navigation, thus excluding sites that should not be viewed by minors.

Another object of the present invention is to provide a method for controlling access to a data communication network which allows to tag the various sites according to their suitability or unsuitability for viewing by minors.

Another object of the present invention is to provide a method for controlling access to a data communication network which is highly reliable, relatively simple to provide and at competitive costs.

This aim and these and other objects which will become better apparent hereinafter are achieved by a method according to claim 1.

Further characteristics and advantages of the invention will become better apparent from the description of a preferred but not exclusive embodiment of the method according to the invention, illustrated only by way of non-limitative example in the accompanying drawings, wherein:
Figure 1 is a block diagram of the process for the connection of a user to a data communication network by means of the method according to the present invention;
Figure 2 is a flowchart of the user identification procedure used in the method according to the present invention; and
Figure 3 is a block diagram of the verification of the Internet pages that can be performed by way of the method according to the present invention.

With reference to the figures, the method according to the invention is as follows.

The user, generally designated by the reference numeral 1, upon requesting connection to a data communication network by calling through his computer the telephone number of a service provider 2 with which he has previously agreed an appropriate contract for the service, is identified by being asked a password and a user identification word.

The identification step is generally designated by the reference numeral 3.

At this point the identification procedure checks, by accessing a database 4, the information received from the user connected to the service provider 2, and identifies the user profile, ascertaining whether the user is an adult or a minor and, in the latter case, the age group to which the minor belongs.

The identification procedure operates consequently in two different modes:
if the user profile corresponds to an adult, step 5, and therefore has no restrictions to the network navigation, the access by means of the computer of the user 6 is unrestricted. Access to the network in this case is designated by the reference numeral 7.

Otherwise, if the user profile corresponds to a minor, step 8, access to the network by means of the computer of the user 9 (who in this case is a minor) occurs in a controlled manner, designated by the reference numeral 10.

Essentially, therefore, the method according to the invention employs user registration means for accessing a data communication network, which can be identified by the service provider 2, means for authenticating the user connected by means of the service provider 2, which can be identified by the identification method 3, and at least one database 4 which contains registered user profiles.

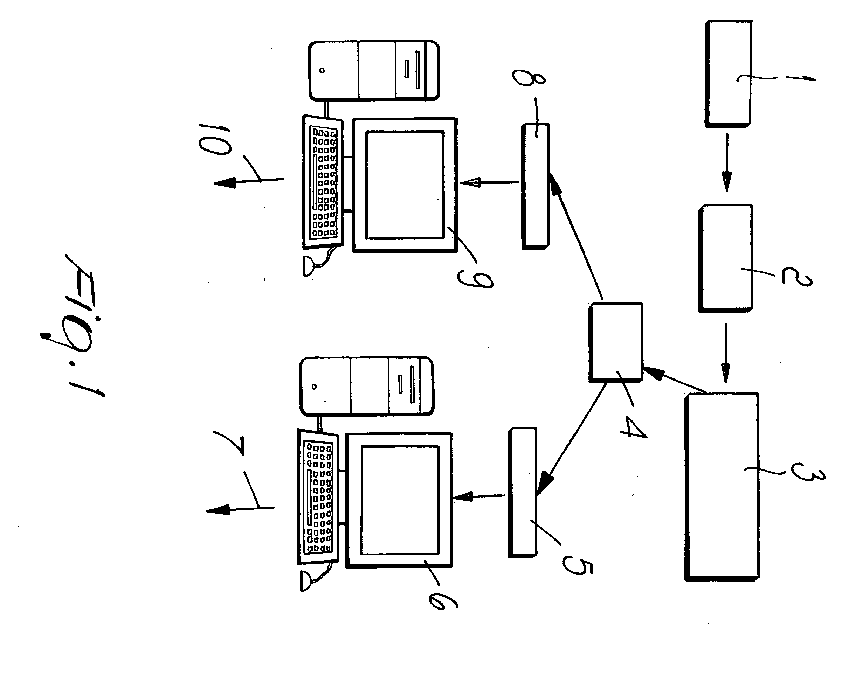

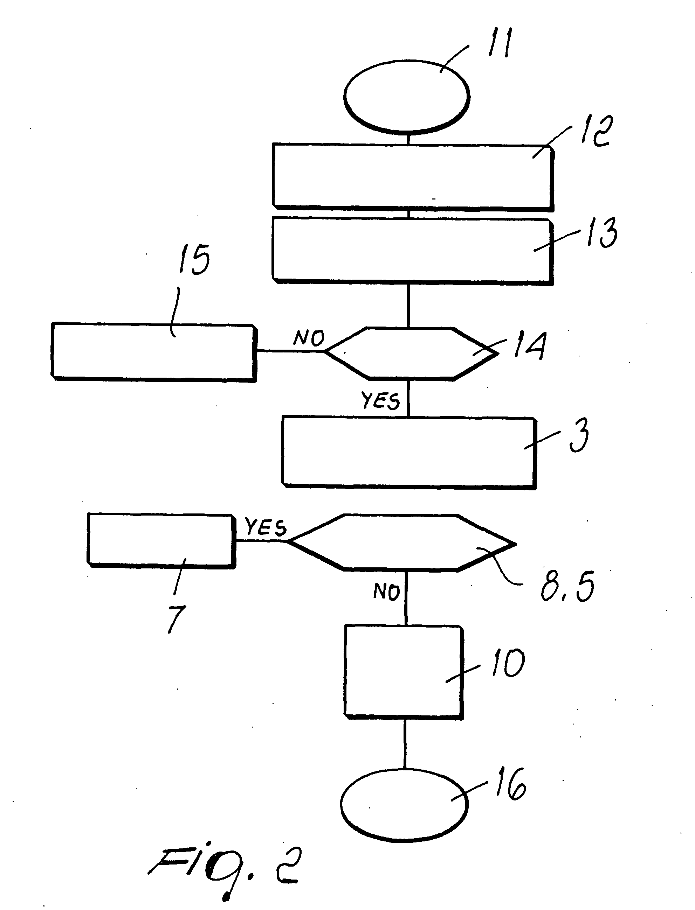

Essentially, the flowchart of the method according to the invention, which corresponds to the block diagram of Figure 1, is shown in Figure 2, in which identical reference numerals designate identical steps.

Essentially, the reference numeral 11 designates the previously described step of registering a user 1 with the service provider 2, the reference numeral 12 designates a step of requesting access to the network, and the reference numeral 13 designates the request for authentication by the service provider 2, which is performed by sending, by the user, a password and a user identification word.

The step 14 represents the check performed by the service provider 2 as to whether the user 1 is registered or not; if he is not registered, the connection is terminated, step 15; otherwise the method moves on to step 3 for user profile authentication.

Finally, the step 16 represents the end of the registration step 11.

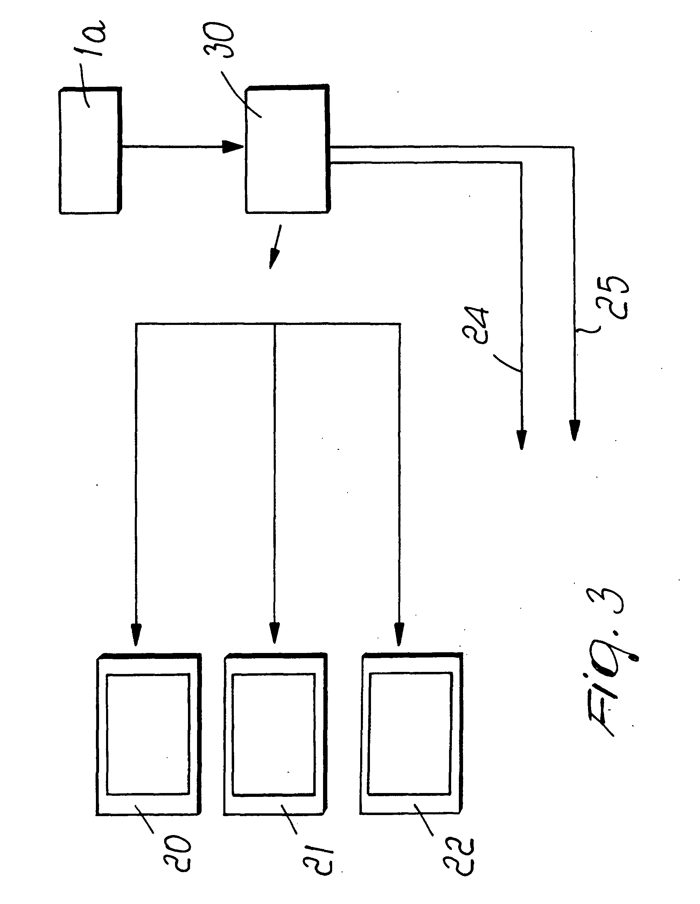

The controlled navigation procedure step 10 is shown in detail in Figure 3.

During this step, therefore when the user 1 is recognized as a minor, navigation is controlled and the list of sites requested by the user who is navigating is sent for example by e-mail to the parents of the minor user.

In the controlled navigation procedure, all the sites that can be identified as being accessible by a minor have an identification key, and all the sites that cannot be accessed by a minor are identified by a different identification key.

The method according to the invention therefore provides for verification of the existence of said accessibility key or, alternatively, of said non-accessibility key.

In Figure 3, the reference numeral 20 designates an inaccessible site, which is accordingly tagged with the non-accessibility key, while the reference numeral 21 designates a site which is accessible to minors and is therefore tagged with the accessibility key.

Finally, the reference numeral 22 designates an unidentifiable site, i.e., a site which is not tagged by any of the above keys. Essentially, once the user has been identified as a minor, who is designated in this case by the reference numeral 1a, the method according to the invention provides, by means of appropriate software means 30, a step of identifying said accessibility or non-accessibility keys together with a step of disabling all ports enabled for credit-card transactions and the like.

If the site that the user wishes to visit is not tagged with the accessibility key, the page is not transmitted; otherwise it is transmitted but the site, i.e., all the pages of the site, are checked as a precaution for the existence of certain key words that are suitable to define the identity of the site.

If instead the accessibility or non-accessibility key is not present in the site that the user 1a intends to view, the controlled navigation procedure 10 checks all the pages of the site in order to determine the existence of the above defined keywords.

Only if such keywords have not been found in the pages of the site can said site be considered freely accessible by the user 1a.

Essentially, the method according to the invention allows to verify the accessibility of a site directly at the service provider 2, who is able to identify the profile of the user who wishes to perform the connection and therefore to determine whether he is an adult or a minor.

The navigation procedure 10 according to the invention furthermore provides a step 24 for sending the navigation report to the parent of the minor, as well as a step 25 of sending the navigation report, in this case anonymously, i.e., without knowing who the user who performed the navigation is, to an association and/or foundation provided for this purpose.

In practice it has been found that the method according to the invention fully achieves the intended aim and objects, since it allows to perform connections of users to the network, taking into account the age of the user and therefore, in the case of minor users, guiding navigation in a controlled manner.

The method thus conceived is susceptible of numerous modifications and variations, all of which are within the scope of the inventive concept; all the details may furthermore be replaced with other technically equivalent elements.

The disclosures in Italian Patent Application No. MI2000A002189 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for controlling access to a data communication network, comprising the steps of:
- upon connection of a user (1) to a network service provider (2), checking data of the user (1) who wishes to make the connection and comparing said data with a database (4) in order to define a user profile (5, 8);
- **characterized in that** of further comprising the steps of
- identifying a user profile (5, 8) at least by an information pertaining to the age of the user (1);
- according to the user profile (5, 8), allowing free access (7) to said network, and if said user (1) is a minor, accessing said network with a controlled navigation step (10).

2. The method according to claim 1, **characterized in that** said user profile identification step consist in comparing data entered by said user (1) in order to access the network with a database (4) which contains the profiles (5, 8) of users registered with said service provider (2).

3. The method according to claim 1, **characterized in that** said controlled navigation step furthermore comprises checking for the presence, in the sites that said user wishes to visit, of an accessibility key suitable to identify said site (21) as accessible to the minor user (8) or a non-accessibility key suitable to identify said site (20) as not accessible to the minor user (8).

4. The method according to claim 3, **characterized in that** said controlled navigation step furthermore comprises, if said site (21) that the user wishes to visit is tagged by an accessibility key, the step that consists in checking for the presence of preset keywords in the pages of said site (21).

5. The method according to claim 3, **characterized in that** if said accessibility key or said non-accessibility key are not present in said site (20, 21) that the user intends to visit, a step is performed which consists in checking for the presence of preset keywords in the pages of said site (20, 21).

6. The method according to claim 1, **characterized in that** it comprises a step that consists in preparing a report of the navigation (24) performed by said user (8) and in sending said report to the parents of said minor user (8).

7. A device for controlling access to a data communication network, **characterized in that** it comprises means for registering at least one user (1) for enabling access to a data communication network;
means for authenticating said user (1);
means for identifying a user profile (5, 8) at least by an information pertaining to the age of the user (1);
means for storing the profile (5, 8) of said user (1); and means for controlling the sites that can be visited by said user (1) on said data communication network, in order to allow a controlled navigation of said user on said data communication network if said user is a minor.

## Patentansprüche

1. Verfahren zur Kontrolle des Zugriffs auf ein Datenkommunikationsnetzwerk, umfassend die Verfahrensschritte:
- nach Verbindung eines Nutzers (1) mit einem Netzwerk-Dienst-Anbieter (2), Überprüfen der Daten des Nutzers (1), der wünscht, die Verbindung herzustellen, und Vergleichen der Daten mit einer Datenbasis (4), um ein Nutzerprofil (5, 8) zu definieren;
- **dadurch gekennzeichnet, dass** es weiterhin umfasst die Verfahrensschritte
- Identifizierung eines Nutzerprofils (5, 8) zumindest durch eine Information, die das Alter des Nutzers (1) betrifft;
- Erlauben eines freien Zugriffs (7) auf das Netzwerk entsprechend dem Nutzerprofil (5, 8) und Zugriff auf das Netzwerk mit einem kontrollierten Navigationsschritt (10), falls der Nutzer (1) eine minderjährige Person ist.

2. Verfahren nach Anspruch 1, **dadurch gekennzeichnet, dass** der Nutzerprofil-Identifikationsschritt darin besteht, Daten, die durch den Nutzer (1) eingegeben wurden, um auf das Netzwerk zuzugreifen, mit einer Datenbasis (4) zu vergleichen, die die Profile (5, 8) von Nutzern enthält, die bei dem Dienst-Anbieter (2) registriert sind.

3. Verfahren nach Anspruch 1, **dadurch gekennzeichnet, dass** der kontrollierte Navigationsschritt ferner umfasst das Abprüfen, ob auf den Internet-Auftritten, die ein Nutzer zu besuchen wünscht, vorhanden ist ein Zugänglichkeitscode, der geeignet ist, den Auftritt (21) als für einen minderjährigen Nutzer (8) zugänglich zu identifizieren, oder ein Nicht-Zugänglichkeits-Code, der geeignet ist, die Seite (20) als für einen minderjährigen Benutzer (8) nicht-zugänglich zu identifizieren.

4. Verfahren nach Anspruch 3, **dadurch gekennzeichnet, dass** der kontrollierte Navigationsschritt ferner den Schritt umfasst, der darin besteht, das Vorhandensein von voreingestellten Schlüsselwörtern auf den Seiten des Internet-Auftritts (21) abzuprüfen, falls der Intemet-Auftritt (21), den der Nutzer zu besuchen wünscht, mit einem Zugänglichkeits-Code markiert ist.

5. Verfahren nach Anspruch 3, **dadurch gekennzeichnet, dass**, falls der Zugänglichkeits-Code oder Nicht-Zugänglichkeits-Code auf dem Internet-Auftritt (20, 21), den der Nutzer zu besuchen beabsichtigt, nicht vorhanden sind, ein Schritt ausgeführt wird, der darin besteht, das Vorhandensein voreingestellter Codewörter auf den Seiten des Internet-Auftritts (20, 21) abzuprüfen.

6. Verfahren nach Anspruch 1, **dadurch gekennzeichnet, dass** es einen Schritt umfasst, der darin besteht, einen Bericht der Navigation (24), wie sie vom Nutzer (8) durchgeführt wurde, zu erstellen und diesen Bericht an die Eltern des minderjährigen Nutzers (8) zu senden.

7. Verfahren zur Kontrolle des Zugriffs auf ein Datenkommunikationsnetzwerk, **dadurch gekennzeichnet, dass** es umfässt Mittel zum Registrieren zumindest eines Nutzers (1) zur Ermöglichung eines Zugriffs auf ein Datenkommunikationsnetzwerk;
- Mittel zur Authentifizierung des Nutzers (1);
- Mittel zur Identifizierung eines Nutzerprofils (5, 8) zumindest durch eine Information betreffend das Alter des Nutzers (1);
- Mittel zum Speichern des Profils (5, 8) des Nutzers (1); und
- Mittel zum Kontrollieren der Internet-Auftritte, die durch den Nutzer (1) auf dem Datenkommunikationsnetzwerk besucht werden können, um eine kontrollierte Navigation des Nutzers auf dem Datenkommunikationsnetzwerk zu erlauben, falls der Nutzer eine minderjährige Person ist.

## Revendications

1. Procédé pour contrôler l'accès à un réseau de communication de données, comprenant les étapes consistant à :
- lors de la connexion d'un utilisateur (1) à un fournisseur de services de réseau de communication (2), vérifier des données de l'utilisateur (1) qui désire effectuer la connexion et comparer lesdites données à une base de données (4) de manière à définir un profil d'utilisateur (5, 8) ;
- **caractérisé en ce qu'**il comprend en outre les étapes consistant à :
- identifier un profil d'utilisateur (5, 8) au moins par une information relative à l'âge de l'utilisateur (1) ;
- en fonction du profil d'utilisateur (5, 8), permettre le libre accès (7) au dit réseau et, si ledit utilisateur (1) est un mineur; accéder au dit réseau avec une étape de navigation contrôlée (10).

2. Procédé selon la revendication 1, **caractérisé en ce que** ladite étape d'identification de profil d'utilisateur consiste à comparer des données saisies par ledit utilisateur (1) de manière à accéder au réseau avec une base de données (4) qui contient les profils (5, 8) d'utilisateurs enregistrés avec ledit fournisseur de services (2).

3. Procédé selon la revendication 1, **caractérisé en ce que** ladite étape de navigation contrôlée comprend en outre la vérification de la présence, dans les sites que l'utilisateur désire visiter, d'une clé d'accessibilité appropriée pour identifier ledit site (21) comme accessible à l'utilisateur mineur (8) ou une clé de non-accessibilité appropriée pour identifier ledit site (20) comme non accessible à l'utilisateur mineur (8).

4. Procédé selon la revendication 3, **caractérisé en ce que** ladite étape de navigation contrôlée comprend en outre, si ledit site (21) que l'utilisateur désire visiter est étiqueté par une clé d'accessibilité, l'étape qui consiste à vérifier la présence de mots-clés prédéterminés dans les pages dudit site (21).

5. Procédé selon la revendication 3, **caractérisé en ce que**, si ladite clé d'accessibilité ou ladite clé de non-accessibilité n'est pas présente dans ledit site (20, 21) que l'utilisateur entend visiter, une étape est effectuée qui consiste à vérifier la présence des mots-clés prédéterminés dans les pages dudit site (20, 21).

6. Procédé selon la revendication 1, **caractérisé en ce qu'**il comprend une étape qui consiste à préparer un rapport de la navigation (24) effectuée par ledit utilisateur (8) et à envoyer ledit rapport aux parents dudit utilisateur mineur (8).

7. Dispositif pour contrôler l'accès à un réseau de communication de données, **caractérisé en ce qu'**il comprend des moyens pour enregistrer au moins un utilisateur (1) pour valider l'accès à un réseau de communication de données ;
des moyens pour authentifier ledit utilisateur (1) ;
des moyens pour identifier un profil d'utilisateur (5, 8) au moins par une information relative à l'âge de l'utilisateur (1) ;
des moyens pour mémoriser le profil (5, 8) dudit utilisateur (1) ; et
des moyens pour contrôler les sites qui peuvent être visités par ledit utilisateur (1) sur ledit réseau de communication de données, de manière à permettre une navigation contrôlée dudit utilisateur sur ledit réseau de communication si ledit utilisateur est un mineur.
